# EUROPÄISCHE PATENTANMELDUNG

(11) **EP 2 000 696 A2**
(43) Veröffentlichungstag der Anmeldung: **10.12.2008**
(21) Anmeldenummer: 08154180.7
(22) Anmeldetag: 08.04.2008
(51) Int. Cl.: F16F 9/348

(54) **Dämpfventil für einen Schwingungsdämpfer**

(30) Priorität: 08.06.2007 DE 102007026571
(71) Anmelder: ZF Friedrichshafen AG, 88038 Friedrichshafen (DE)
(72) Erfinder: Moller, Robert, 97491 Aidhausen (DE)

(57) **Zusammenfassung**

Dämpfventil (1), insbesondere für einen Schwingungsdämpfer, umfassend einen Ventilkörper (9), der mindestens eine Durchtrittsöffnung (11) aufweißt, die von mindestens einer elastische Ventilscheibe (13) auf mindestens einer Stirnfläche zumindest teilweise abgedeckt sind, wobei die elastische Ventilscheibe zwischen einer ventilkörperseitigen Fixierfläche (15) und einer Spannfläche (17) eine Spannungskette aufbaut und mit ihrem elastisch verformbaren Bereich mit einer Auflagefläche (21) zusammenwirkt, wobei die Fixierfläche und die Auflagefläche bezogen auf den Ventilkörper als erhabene Flächen ausgebildet sind, dadurch gekennzeichnet, dass der auf die elastische Ventilscheibe wirkende mittlere Kraftangriffspunkt (16) der Spannfläche zwischen dem mittleren Kraftangriffspunkt (18) der Fixierfläche und dem mittleren Kraftangriffspunkt der Auflagefläche liegt.

## Beschreibung

Die Erfindung betrifft ein Dämpfventil für einen Schwingungsdämpfer gemäß dem Oberbegriff von Patentanspruch 1.

Die DE 10 2004 060 485 A1 beschreibt ein Dämpfventil für einen Schwingungsdämpfer, der an einer Kolbenstange angeordnet ist, wobei das Dämpfventil einen Ventilkörper umfasst, auf dem beidseitig mindestens eine elastische Ventilscheibe angeordnet ist, die Drosselkanäle im Ventilkörper zumindest teilweise bedeckt. Das Dämpfventil samt Ventilscheiben ist über Auflager- und Stützscheiben, am unteren Ende zusätzlich durch eine Ausgleichsscheibe zwischen einer über dem Dämpfventil liegenden Fixierfläche und einer Mutter am Kolbenstangenende verspannt. Um einen definierten Kraftflussweg innerhalb der Verspannungskette von der Ventilscheibe bis zur Mutter wiederholgenau ausführen zu können, ist ein Kontaktbereich zwischen der Stütz- und der Ausgleichsscheibe als eine vom Grundkörper erhabene Fläche ausgeführt. Der Grundkörper kann hierbei sowohl die Stützscheibe, als auch die Ausgleichsscheibe sein. Diese Wiederholgenauigkeit ist insofern wichtig, da wie in DE 101 59 936 C1 beschrieben geringste Veränderungen der Hebellängen der einseitig verspannten Bauteile erheblichen Einfluss auf die Dämpfcharakteristik haben.

Es hat sich jedoch herausgestellt, dass bei besonders hoch belasteten Dämpfventilen ein Spannungsverlust der Ventilscheiben auftritt. Wenn ein vorschriftsmäßig montiertes Dämpfventil erstmalig einer Spitzenbelastung ausgesetzt ist, dann hebt die mindestens eine Ventilscheibe von einer Ventilsitzfläche ab und kommt nach dem Abklingen auf der Ventilsitzfläche wieder zur Anlage. Messreihen haben jedoch gezeigt, dass dieses Dämpfventil danach jedoch nicht mehr die vorgesehene Dämpfkraft erzeugen kann.

Bisherige Lösungen sehen vor, durch eine überhöhte Vorspannung den auftretenden Spannungsverlust zu kompensieren, was allerdings zu Dauerlaufproblemen aufgrund der erhöhten Belastung führt.

Aufgabe der vorliegenden Erfindung ist es, die aus dem Stand der Technik bekannten Probleme des Spannungsverlusts der Ventilscheiben zu beheben.

Erfindungsgemäß wird die Aufgabe dadurch gelöst, dass der mittleren Kraftangriffspunkt der Spannfläche zwischen dem mittleren Kraftangriffspunkt der Fixierfläche und dem mittleren Kraftangriffspunkt der Auflagefläche angeordnet ist.

Der Kraftflussweg der Spannungskette kann dadurch derart geführt werden, dass ein Biegemoment auf die mindestens eine elastische Ventilscheibe übertragen wird und somit das Problem des Spannungsverlustes behoben wird. Dieses Ergebnis wurde durch die Auswertung zahlreicher Versuchsreihen bestätigt.

Die einfachste Ausführungsform einer Spannfläche besteht in der Verwendung einer planen Spannscheibe.

Durch die Zentrierung der Spannscheibe mittels einer Zentrierscheibe wird die Möglichkeit gegeben den radialen Verlauf des Kraftflusswegs der Spannungskette individuell nach dem Bauraum auszulegen. Dies kann durch die Wahl der radialen Ausdehnung der Zentrierscheibe erfolgen, da z.B. je nach Anzahl oder Stärke der Ventilscheiben ein angepasstes Biegemoment übertragen werden muss. Dabei ist zu beachten, dass die axiale Ausdehnung der Zentrierscheibe maximal der der Spannscheibe betragen darf, damit die Übertragung eines Biegemoments auf die mindestens eine Ventilscheibe gewährleistet werden kann. Durch den Einsatz einer Zentrierscheibe wird auch vorteilhafterweise das Aufkommen von Klappergeräuschen vermieden, da sich somit kein radiales Spiel für die Spannscheibe ergibt.

Für die Ausgestaltung der Ventilkörper bestehen vielfältige Ausführungsvarianten, vor Allem im Zusammenhang mit der radialen Lage der Fixier- und der Spannfläche. Durch den Einsatz einer Übertragungsscheibe, die unmittelbar auf die Spannscheibe in der Spannungskette wirkt, kann somit die Erfindung unabhängig der Ventilkörpervariante eingesetzt werden.

Eine weitere vorteilhafte Ausführungsform stellt eine zur Ventilscheibe gerichtete gestufte Kontur der Spannscheibe dar. Die erhabene Fläche bildet dabei die Spannfläche. Entspricht der Innendurchmesser der Spannfläche mindestens dem Außendurchmesser der Fixierfläche, dann stellt die axial kleine Stufe der Spannscheibe eine Sicherheitsvorkehrung dar, da die mindestens eine elastische Ventilscheibe an dem zur Fixierfläche beabstandeten Flächenbereich der Spannscheibe zum Anliegen kommt, bevor die Ventilscheibe übermäßig vorgespannt wird. Des Weiteren kann je nach Auslegung der Stufenhöhe der erhabenen Fläche das Biegemoment auf die mindestens eine Ventilscheibe variiert werden.

Um eine Überbelastung der Ventilscheiben in Abhubrichtung zu vermeiden, werden häufig sogenannte Stützscheiben in die Spannungskette integriert. Durch die Ausbildung der Spannfläche auf einer topfförmigen Spannscheibe wird diese Stützfunktion bereits durch die Spannscheibe erfüllt. Da der Topfboden vom Prinzip her der vorbeschriebenen Übertragungsscheibe entspricht, wird durch diese Variante eine weitere Funktionen in einem einzelnen Bauteil vereint und dadurch ein erhebliches Kosteneinsparungspotential geboten.

Vorteilhafterweise kann die Spannfläche auch auf einer erhabenen Fläche eines Befestigungsmittels gebildet werden. Bei Kolbendämpfventilen werden z.B. oftmals Kolbenmuttern als Befestigungsmittel eingesetzt. Wird die Spannfläche also bereits in das Befestigungsmittel integriert, kann auf weitere Einzelteile in diesem Abschnitt der Spannungskette verzichtet werden, was den Zusammenbauaufwand minimiert.

Für die Fixierfläche stellt sich die Verwendung einer separaten Fixierscheibe als besonders vorteilhaft dar. Denn dadurch, dass zwischen der Fixierfläche und der Auflagefläche oftmals eine Ringraben zur Erhöhung der druckbeaufschlagten Fläche vorgesehen ist, kann auch unabhängig vom Ventilkörper durch die Variation der Baubreite, sowie der Bauhöhe der Fixierscheibe der Einfluss dieser Fläche beeinflusst werden.

Alternativ kann die Fixierfläche aber auch von einer erhabenen Fläche des Ventilkörpers gebildet werden. Dies verringert den Zusammenbauaufwand durch die geringere Anzahl an Einzelteilen.

Die Erfindung ist nachstehend anhand von Ausführungsbeispielen noch ausführlicher erläutert. Die Figuren zeigen:
- **Fig. 1:**: Dämpfventil mit Spannfläche als erhabene Fläche eines Befestigungsmittels
- **Fig. 2:**: Dämpferventil mit Spannscheibe und Zentrierscheibe
- **Fig. 3:**: Dämpferventil mit Spannscheibe mit gestufter Kontur
- **Fig. 4:**: Dämpferventil mit Übertragungsscheibe und Zentrierscheibe
- **Fig. 5:**: Dämpferventil mit topfförmiger Spannscheibe

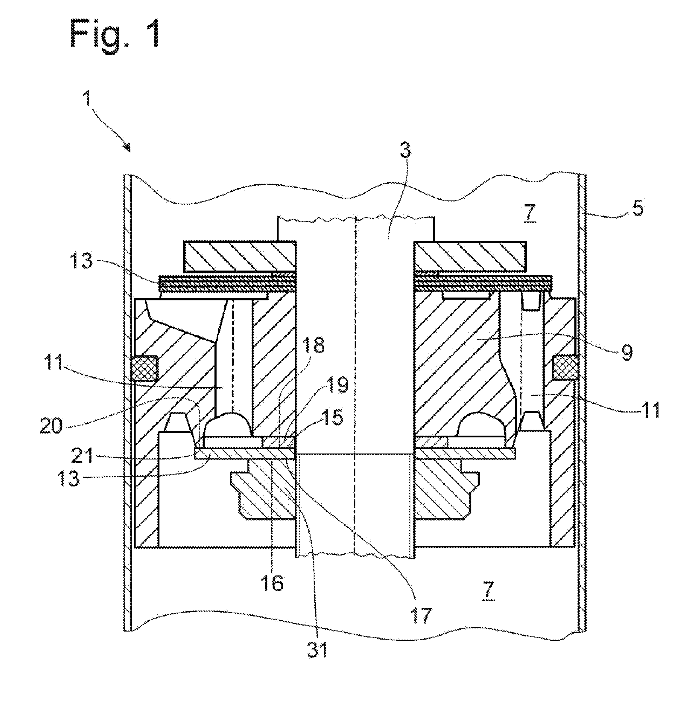

Die Fig. 1 zeigt ein Dämpfventil 1 in der Ausführungsform eines Kolbenventils für einen Schwingungsdämpfer. Dieses ist an einer axial beweglichen Kolbenstange 3 montiert und unterteilt einen mit Dämpfmedium gefüllten Zylinder 5 in zwei Arbeitsräume 7. Das Kolbenventil besteht im Wesentlichen aus einem Ventilkörper 9, welcher richtungsabhängige Durchtrittsöffnungen 11 für die Zug- und Druckrichtung aufweist. Um eine Dämpfwirkung erreichen zu können, sind die Durchtrittsöffnungen 11 richtungsabhängig zumindest teilweise mit mindestens einer elastischen Ventilscheibe 13 abgedeckt, wobei diese zwischen einer ventilkörperseitigen Fixierfläche 15 und einer Spannfläche 17 verspannt ist. Zum besseren Verständnis der Erfindung ist in Fig. 1 auf einer Kolbenoberseite eine aus dem Stand der Technik bekannte Ventilscheibenanordnung gezeigt. Auf einer Ventilkörperunterseite ist beispielhaft die erfindungsgemäße Ausgestaltung des Dämpfventils dargestellt. Die Fixierfläche 15 wird in Zugrichtung der Kolbenstange 3 durch eine separate Fixierscheibe 19 gebildet, welche zusammen mit einer Auflagefläche 21 eine Aufspannebene bildet. Die Auflagefläche 21 ist als erhabene ebene Fläche des Ventilkörpers 9 ausgeführt, wobei der axiale Abstand zur Spannfläche 17 geringer ist, als der der Fixierfläche 15 zur Spannfläche 17. Im Anschluss daran sind die mindestens eine elastische Ventilscheibe 13 und ein Befestigunsmittel 31 angeordnet, das, hier in ähnlicher Form einer Kolbenmutter dargestellt, über eine in Richtung der elastischen Ventilscheibe 13 erhabenen Spannfläche 17 verfügt. Dabei ist der Außendurchmesser der Spannfläche 17 größer ausgeführt als der der Fixierfläche 15. Bei annähernd gleichen Innendurchmessern ergibt sich somit aus dem Durchschnitt der jeweiligen Innen- und Außendurchmesser ein mittlerer Kraftangriffspunkt 16 für die Spannfläche 17 und ein mittlerer Kraftangriffspunkt 18 für die Fixierfläche 15. Der Durchschnitt aus Innen- und Außendurchmesser der Anlagefläche 21 bildet den mittleren Kraftangriffspunkt 20. Entscheidend dabei ist, dass der mittlere Kraftangriffspunkt 16 der Spannfläche 17 zwischen dem mittleren Kraftangriffspunkt 18 der Fixierfläche 15 und dem mittleren Kraftangriffspunkt 20 der Auflagefläche 21 liegt. Daraus ergibt sich eine Spannungskette, ausgehend von der Spannfläche 17 der Kolbenmutter bis zur Fixierfläche 15 der Fixierscheibe 19, bei der zusätzlich ein Biegemoment auf die mindestens eine elastische Ventilscheibe 13 ausgeübt wird. Diese, sowie die folgenden Ausführungsvarianten der Wirkflächen, sind richtungsunabhängig und lassen sich ebenso auf den Einsatz in einem Bodenventil übertragen.

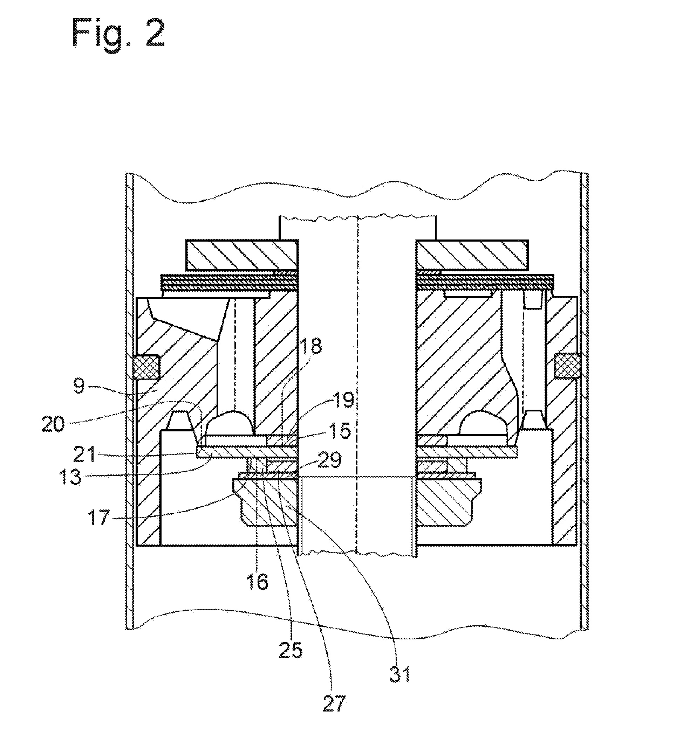

In Fig. 2 wird eine Alternative zur in Fig. 1 gezeigten Lösung dargestellt. Beispielhaft wird wieder die Kolbenunterseite betrachtet.

Die Ausgestaltung der Auflageebene für die mindestens eine elastische Ventilscheibe 13 entspricht der in Fig.1. Die Spannfläche 17 ist jedoch auf einer separaten Spannscheibe 25 ausgeführt, die mittels einer Zentrierscheibe 27 zum Ventilkörper 9 zentriert wird, wobei die axiale Ausdehnung der Zentrierscheibe 27 maximal der der Spannscheibe 25 entspricht, damit der Kraftflussweg garantiert durch die Spannscheibe 25 geleitet werden kann. Die radiale Ausdehnung der Zentrierscheibe 27 ist abhängig von der gewünschten Dämpfkraftlinie, denn je radial näher der mittlere Kraftangriffspunkt 16 der Spannscheibe 25 zum mittleren Kraftangriffspunkt 20 der Auflagefläche 21 liegt, desto größer ist das wirksame Biegemoment auf die elastische Ventilscheibe 13. Vorteilhafterweise ist die verwendete Zentrierscheibe 27 identisch mit der Fixierscheibe 19. Dadurch können z.B. keine Verwechslungen beim Zusammenbau auftreten.

Um den maximalen Abhubweg der elastischen Ventilscheibe 13 zu begrenzen, ist in Richtung einer Kolbenmutter als Befestigungsmittels 31 eine Stützscheibe 29 im Anschluss an die Spann- und Zentrierscheibe 25, 19 angeordnet. Mit einem Anzugsmoment auf das Befestigungsmittel 31 wird schließlich die Spannungskette geschlossen.

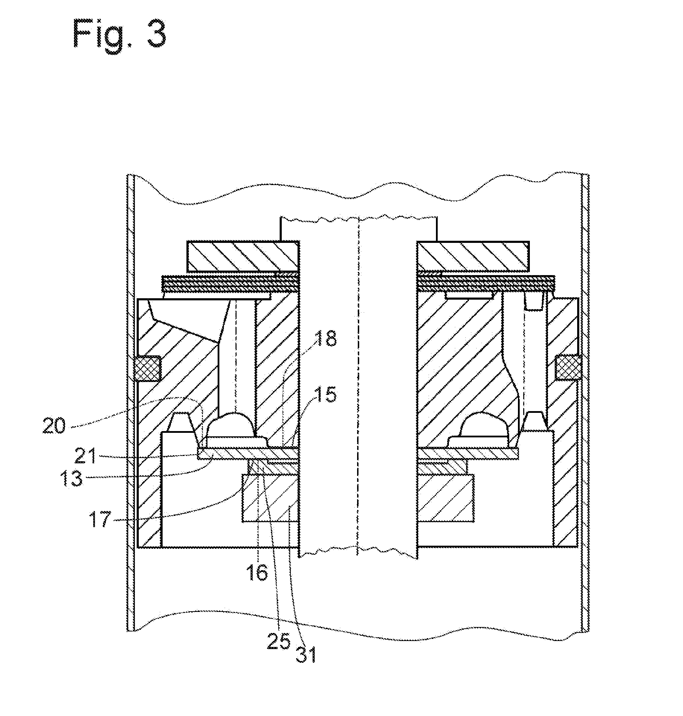

Eine weitere Ausführungsvariante wird in Fig. 3 dargestellt. Die in Fig. 2 verwendete Lösung mit Spannscheibe 25 und Zentrierscheibe 27 kann auch einteilig unter zu Hilfenahme einer Spannscheibe 25 mit gestufter Kontur realisiert werden. Die gestufte Kontur ist zur Ventilscheibe 13 hingerichtet und weist auf ihrer erhabenen Fläche die Spannfläche 17 auf. Die Fixierfläche 15 wird hierbei ebenso wie die Auflagefläche 21 von einer erhabenen Fläche des Ventilkörpers 9 gebildet und legt somit die Aufspannebene fest, die wie in Fig. 1 beschrieben einen geringen Höhenversatz aufweist.

Als Alternative zu einer Kolbenmutter als Befestigungsmittel 31, wird ein Ring über eine Presspassung angeordnet, der die Kraft in die Spannungskette einleitet.

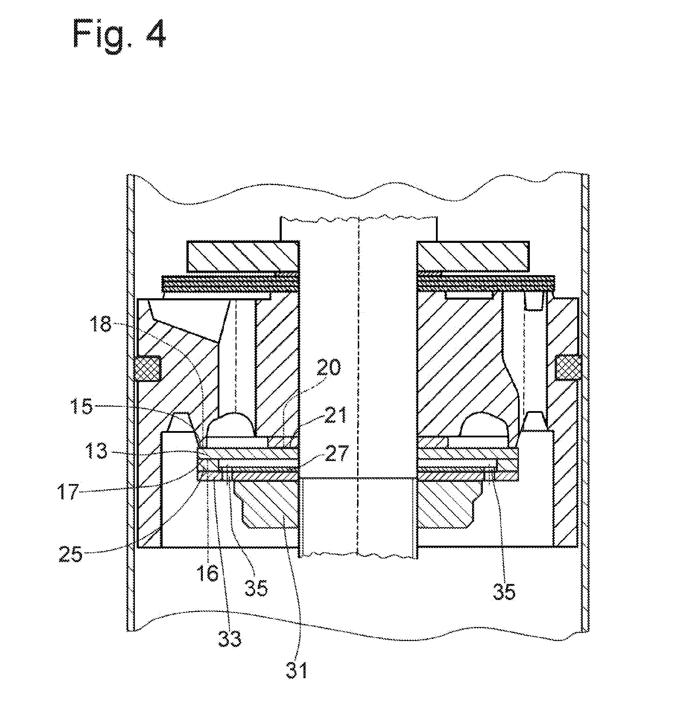

Mit Hilfe einer Übertragungscheibe 33 (Fig. 4), die unmittelbar auf die Spannscheibe 25 in der Spannungskette wirkt, lässt sich der Kraftfluss von einer kolbenstangenseitigen Bahn auf eine zylinderseitige Bahn lenken. Die Durchmesser von der Spann- und der Fixierfläche 17, 15 sind so gewählt, dass ein Biegemoment auf die elastische Ventilscheibe 13 übertragen werden kann. Die Aufspannebene wird funktionsgleich zu Fig. 1 gebildet, wobei die Auflagefläche 21 kolbenstangenseitig und die Fixierfläche 15 zylinderseitig angeordnet ist. Die Spannscheibe 25 wird ebenfalls wie in Fig. 1 durch eine Zentrierscheibe 27 zur Kolbenstange 3 zentriert, wobei diese sowie die Übertragungsscheibe 33 Durchlassöffnungen 35 für das Dämpfmedium aufweisen um beide Arbeitsräume 7 miteinender zu verbinden. Zudem erfüllt die Übertragungsscheibe 33 die Funktion einer Stützscheibe (29 aus Fig. 2), da sie den maximalen Abhubweg des elastisch verformbaren Bereichs der Ventilscheibe 13 definiert. Durch das Aufschrauben einer Kolbenmutter als Befestigungsmittel 31 wird wiederum eine Spannungskette von dieser bis zur Fixierfläche 15 aufgebaut.

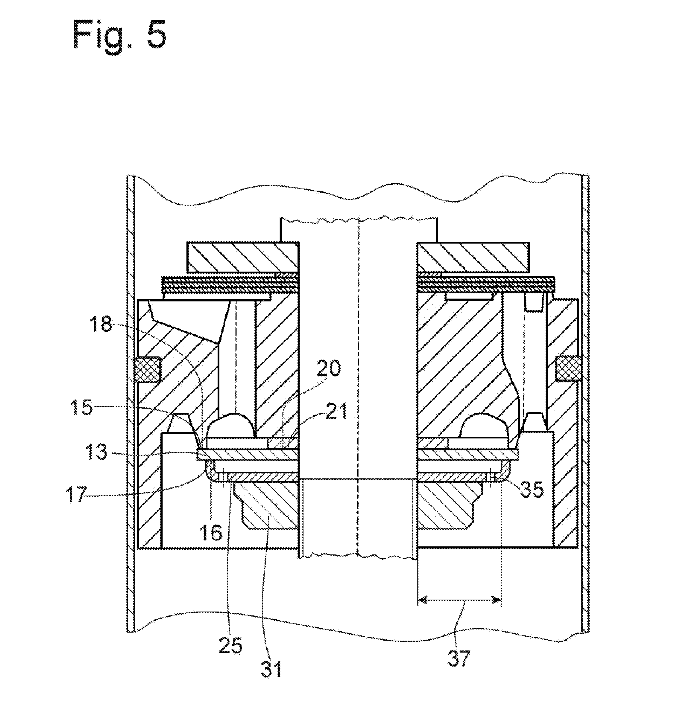

Die Fig. 5 zeigt die einteilige Variante der in Fig. 4 beschriebenen Ausführungsform. Hierfür wird eine topfförmige Spannscheibe 25 verwendet. Diese weist wie die Übertragungsscheibe 33 Durchlassöffnungen 35 auf. Der Kraftflussweg kann wieder je nach Auslegung des Topfbodenbreite 37 in seiner radialen Bahn beeinflusst werden. Die Funktion der Abhubbegrenzung einer Stützscheibe (29 aus Fig. 2) für die mindestens eine elastische Ventilscheibe wird ebenfalls durch die topfförmige Spannscheibe 25 erfüllt. Eine Kolbenmutter als Befestigungsmittel 31 bildet wiederum den Abschluß der Spannungskette.

## Patentansprüche

1. Dämpfventil (1), insbesondere für einen Schwingungsdämpfer, umfassend einen Ventilkörper (9), der mindestens eine Durchtrittsöffnung (11) aufweißt, die von mindestens einer elastische Ventilscheibe (13) auf mindestens einer Stirnfläche zumindest teilweise abgedeckt sind, wobei die elastische Ventilscheibe (13) zwischen einer ventilkörperseitigen Fixierfläche (15) und einer Spannfläche (17) eine Spannungskette aufbaut und mit ihrem elastisch verformbaren Bereich mit einer Auflagefläche (21) zusammenwirkt, wobei die Fixierfläche (15) und die Auflagefläche (21) bezogen auf den Ventilkörper (9) als erhabene Flächen ausgebildet,
**dadurch gekennzeichnet,**
**dass** der auf die elastische Ventilscheibe (13) wirkende mittlere Kraftangriffspunkt (16) der Spannfläche (17) zwischen dem mittleren Kraftangriffspunkt (18) der Fixierfläche (15) und dem mittleren Kraftangriffspunkt (20) der Auflagefläche (21) liegt.

2. Dämpferventil nach Anspruch 1,
**dadurch gekennzeichnet,**
**dass** die Spannfläche (17) an einer Spannscheibe (25) ausgebildet ist.

3. Dämpferventil nach Anspruch 2,
**dadurch gekennzeichnet,**
**dass** die Spannscheibe (25) über eine Zentrierscheibe (27) zumindest mittelbar zum Ventilkörper (9) zentriert wird, wobei die axiale Ausdehnung der Zentrierscheibe (27) maximal der der Spannscheibe (25) entspricht.

4. Dämpferventil nach Anspruch 2,
**dadurch gekennzeichnet,**
**dass** die Spannscheibe (25) mittels einer Übertragungsscheibe (33) auf die mindestens eine Ventilscheibe (13) wirkt.

5. Dämpferventil nach Anspruch 2,
**dadurch gekennzeichnet,**
**dass** die zur Ventilscheibe hingerichtete Deckfläche der Spannscheibe (25) eine gestufte Kontur aufweist, wobei die erhabene Fläche die Spannfläche (17) bildet.

6. Dämpferventil nach Anspruch 2,
**dadurch gekennzeichnet,**
**dass** die Spannfläche (17) an einer topfförmigen Spannscheibe (25) ausgebildet ist.

7. Dämpferventil nach Anspruch 1,
**dadurch gekennzeichnet,**
**dass** die Spannfläche (17) als erhabene Fläche eines Befestigungsmittels (31) ausgebildet ist.

8. Dämpferventil nach Anspruch 1,
**dadurch gekennzeichnet,**
**dass** die Fixierfläche (15) von einer separaten Fixierscheibe (19) gebildet wird.

9. Dämpferventil nach Anspruch 1,
**dadurch gekennzeichnet,**
**dass** die Fixierfläche (15) von einer erhabenen Fläche des Ventilkörpers (9) gebildet wird.
